(19) Europäisches Patentamt
European Patent Office
Office européen des brevets

(11) Veröffentlichungsnummer: **0 530 620 A2**

# (12) EUROPÄISCHE PATENTANMELDUNG

(21) Anmeldenummer: **92114311.1**

(22) Anmeldetag: **21.08.92**

(51) Int. Cl.5: **B44D 3/16**, B26D 1/10

(30) Priorität: **03.09.91 DE 9110934 U**

(43) Veröffentlichungstag der Anmeldung:
**10.03.93 Patentblatt 93/10**

(84) Benannte Vertragsstaaten:
**AT BE CH DE DK ES FR GB IT LI NL SE**

(71) Anmelder: **HARTWIG LUHR**
**Knill 19**
**W-2859 Nordholz(DE)**

(72) Erfinder: **HARTWIG LUHR**
**Knill 19**
**W-2859 Nordholz(DE)**

(74) Vertreter: **Hoormann, Walter, Dr.-Ing. et al**
**FORRESTER & BOEHMERT**
**Franz-Joseph-Strasse 38**
**W-8000 München 40 (DE)**

(54) **Werkzeug zum Entfernen von Oberflächenbeschichtungen.**

(57) Die Erfindung betrifft ein Werkzeug zum Entfernen von insbesondere aus Kunststoff oder dergleichen bestehenden Oberflächenbeschichtungen, insbesondere zum Entfernen von Unterbodenschutz auf PVC-Basis oder dergleichen von Kraftfahrzeugen, mit einem wenigstens eine Schneidkante aufweisenden Körper, der an einem Halteelement befestigt ist, wobei der Körper aus einem im wesentlichen streifenförmigen Abschnitt aus Federstahl, Hochleistungsschnellschnittstahl od. dgl. besteht, wenigstens ein Längsrand des Abschnittes die Schneidkante(n) aufweist und sich wenigstens die an die Schneidkante(n) anschließenden Abschnitte zum Halteelement hin erstrecken und an diesem gehalten sind.

Fig.3

EP 0 530 620 A2

Die Erfindung betrifft ein Werkzeug zum Entfernen von insbesondere aus Kunststoff oder dergleichen bestehenden Oberflächenbeschichtungen, insbesondere zum Entfernen von Unterbodenschutz auf PVC-Basis oder dergleichen von Kraftfahrzeugen, mit einem wenigstens eine Schneidkante aufweisenden Körper, der an einem Halteelement oder dergleichen befestigt ist.

Oberflächenbeschichtungen werden in vielen technischen Bereichen eingesetzt. Insbesondere hat es sich bewährt, leicht korrodierende Metallteile mit Kunststoffoberflächen versehen, vor allem die Salzwasser und anderen aggressiven Medien ausgesetzten Teile von Kraftfahrzeugen. Um gegebenenfalls Reparaturen durchführen zu können, kann es erforderlich werden, solche Oberflächenbeschichtungen wenigstens zum Teil wieder zu entfernen.

Es ist bekannt, Schaber oder Spatel oder andere in ihrem Vorderbereich angeschrägte Werkzeuge zu diesem Zweck zu verwenden. Dabei muß das Gerät gegen die Beschichtung gedrückt werden, bei zähen Beschichtungsmaterialien oftmals unter Zuhilfenahme eines Hammers, so daß die scharfe Kante des Gerätes ein wenig unter die Beschichtung gelangt und die Oberflächenbeschichtung nach und nach abgelöst werden kann. Nachteilig bei dieser Vorgehensweise ist der erhebliche einzusetzende Kraftaufwand.

Des weiteren kann man Oberflächenbeschichtungen manuell oder maschinell abschleifen. Dabei tritt neben einer hohen Lärmbelästigung auch eine Belastung durch den Schleifstaub auf, der zudem noch aufwendig entsorgt werden muß. Beim maschinellen Abschleifen ist in der Regel auch das Vorhandensein einer Stromquelle erforderlich.

Der vorliegenden Erfindung liegt nun die Aufgabe zugrunde, ein Werkzeug zum Entfernen von Oberflächenbeschichtungen zu schaffen, welches ohne großen Kraftaufwand handhabbar und welches in der Herstellung einfach ist.

Diese Aufgabe wird von einem Werkzeug der eingangs genannten Gattung mit den Merkmalen des kennzeichnenden Teiles von Patentanspruch 1 gelöst. Vorteilhafte Ausgestaltungen sind Gegenstand der Unteransprüche.

Bei einem Werkzeug zum Entfernen von Oberflächenbeschichtungen besteht erfindungsgemäß der Körper aus einem im wesentlichen streifenförmigen Abschnitt, wobei ein Längsrand des Abschnittes die Schneidkante(n) aufweist und wobei sich wenigstens die an die Schneidkante(n) anschließenden Abschnitte zum Halteelement hin erstrecken und an diesem gehalten werden. Die Lage wenigstens einer der Schneidkanten kann dabei so gewählt werden, daß das Entfernen einer Oberflächenbeschichtung durch ein Ziehen oder Abziehen vorgenommen werden kann, was mit weniger Kraftaufwand zu bewerkstelligen ist als die Drück- oder Stoßbewegung, die bei den derzeit verwendeten Werkzeugen erforderlich ist. Weiterhin ist das Werkzeug einfach und insbesondere kostengünstig herzustellen, weil bei der Dimensionierung des streifenförmigen Abschnittes keine besonderen Anforderungen an Maßgenauigkeit gestellt werden müssen. Auch entfällt ein umständliches Einpassen von Klingen, was bei Schabern in der Regel erforderlich ist.

Durch eine U-förmige Ausbildung des streifenförmigen Abschnitts, die nach einer bevorzugten Ausführungsform vorgesehen sein kann, wobei wenigstens im bogenförmigen Bereich die Schneidkante(n) vorgesehen ist/sind, erreicht man einen sehr guten Abfluß des Materials.

Es können die Abschnitte des Körpers, die sich zum Halteelement hin erstrecken, leicht nach außen gewölbt sein, um den Bereich der Schneidkante bzw. der Schneidkanten unter Vorspannung zu halten und so deren Stabilität bei der Abziehbewegung zu gewährleisten.

Bevorzugt ist an jedem der Längsränder des streifenförmigen Abschnitts eine Schneidkante ausgebildet ist. Dann kann das Werkzeug in zwei Bewegungsrichtungen seine Funktion ausüben. Durch Schaben oder Ziehen des Werkzeugs einerseits, aber auch durch die übliche Drück- oder Stoßbewegung, kann so die Oberflächenbeschichtung gelöst werden. Ferner eröffnet diese Ausbildung des Werkzeuges die Möglichkeit, durch einfaches Umsetzen des streifenförmigen Abschnittes an dem Halteelement eine übermäßig verschlissene Schneidkante in die weniger benutzte Lage zu bringen. Durch einen keilförmigen Anschliff der Schneidkante(n) mit einem Keilwinkel von etwa 30° erreicht man einen sauberen Schnittübergang zu dem Bereich, von dem die Oberflächenbeschichtung nicht entfernt werden soll.

Nach einer weiter bevorzugten Ausführungsform der vorliegenden Erfindung ist an dem Halteelement eine einen Spannkern wenigstens teilweise umgebende Spannhülse vorgesehen, wobei die Abschnitte, welche sich zum Halteelement hin erstrecken, zwischen der Spannhülse und dem Spannkern klemmend gehalten sind. Der streifenförmige Abschnitt kann so optimal eingespannt und nach Verschleiß schnell, bedingt durch die vorteilhafte Klemmhalterung, ausgewechselt werden.

Ist der Spannkern von einer Gewindebohrung durchsetzt, in welche eine im Halteelement vorgesehene Gewindestange eingreift, wobei eine Kontermutter auf der Gewindestange sitzt, so können die Spannhülse und der Spannkern in jeder gewünschten Position fest gehalten werden. Die Schneidkanten können beliebig ausgerichtet werden. Aus Zweckmäßigkeitsgründen wird man die Ausrichtung so wählen, daß eine Ziehbewegung optimal unterstützt wird. Grundsätzlich kann man das Werkzeug aber auch zum seitlichen Schaben und Auskratzen verwenden, falls dieses gewünscht oder erforderlich sein sollte.

Bevorzugt entspricht der äußere Umfang der Kontermutter im wesentlichen dem äußeren Umfang der Spannhülse. Man erhält so maximale Hebelwirkung für einen anzusetzenden Schlüssel bei geringstmöglichen Abmessungen des Werkzeuges. So kann man den streifenförmigen Abschnitt nach Verschleiß leichter auswechseln oder diesen neu positionieren.

Eine hohe Lebensdauer des Werkzeuges erreicht man, indem der streifenförmige Abschnitt aus Federstahl, Hochleistungsschnellschnittstahl oder dergleichen hergestellt ist. Die darüberhinaus erreichte materialbedingte Vorspannung des streifenförmigen Abschnitts gewährt eine bessere Einspannung im Halteelement.

Mit einem Handgriff und einer mit diesem verbundenen Verlängerungsstange als Halteelement kann man das Werkzeug besonders bequem als Handwerkzeug benutzen. Es wird diese Art der Nutzung sogar im Vordergrund stehen, obwohl das Werkzeug auch maschinell betrieben werden und beispielsweise am Arm eines Industrieroboters angebracht werden kann. Bei Benutzung als Handwerkzeug entfällt allerdings die bei maschinellen Verfahren benötigte Stromquelle.

Die oben schon erwähnte Gewindestange kann dabei integral mit dem Verlängerungsstange ausgebildet sein, so daß der streifenförmige Abschnitt direkt, durch die Spannhülse und dem Spannkern am Verlängerungsstange eingespannt, anliegt. Dadurch kann das Werkzeug optimal geführt werden. Ein präzises und genaues Arbeiten mit dem Werkzeug wird sichergestellt. Schleifstaub tritt ebenfalls nicht auf, um dessen Entsorgung man sich zusätzlich kümmern müßte.

Es kann die Verlängerungsstange im Querschnitt kreisförmig sein, wobei ihr Außendurchmesser im wesentlichen dem der Gewindestange entspricht.

Im folgenden soll die Erfindung anhand der beigefügten Zeichnungen lediglich beispielhaft näher erläutert werden. Dabei zeigt:

Fig. 1          eine Seitenansicht eines Ausführungsbeispiels eines Halteelementes, wie es bei einem Werkzeug gemäß der vorliegenden Erfindung verwendet werden kann;

Fig. 2          eine Seitenansicht eines Ausführungsbeispiels nach der Erfindung;

Fig. 3          eine Frontansicht eines U-förmig geformten streifenförmigen Abschnitts, welcher von Spannkern und Spannhülse gehalten ist;

Fig. 4(a)      eine Seitenansicht einer Spannhülse;

Fig. 4(b)      eine Ansicht der Spannhülse aus Fig. 4(a) von unten;

Fig. 4(c)      eine Querschnittsdarstellung eines Spannkerns; und

Fig. 5          eine schematische Ansicht eines U-förmig ausgebildeten streifenförmigen Abschnitts.

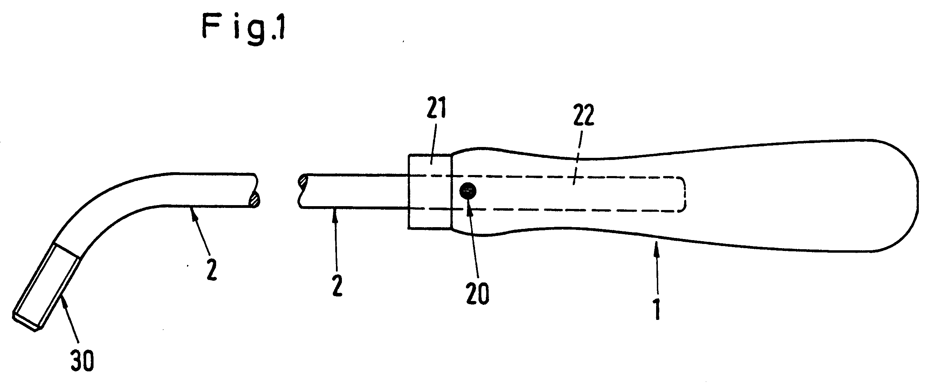

Fig. 1 zeigt eine Seitenansicht eines Ausführungsbeispiels eines Halteelementes, wie es bei einem Werkzeug gemäß der vorliegenden Erfindung verwendet werden kann. In einem Haltegriff 1 ist in einer entsprechend ausgebildeten Aussparung ein Befestigungsabschnitt 22 einer Verlängerungsstange 2 festgelegt, wobei dieser bis etwa zur Mitte des Haltegriffs 1 ragt. Es ist jedoch auch möglich, den Befestigungsabschnitt weniger weit oder weiter, auch bis zum hinteren Ende des Haltegriffs 1, in diesen zu versenken. Der Befestigungsabschnitt 22 wird am Haltegriff 1 mittels eines Stiftes oder mehrerer Stifte 20 gehalten, wobei Fig. 1 nur einen Stift 20 wiedergibt, welcher am vorderen Ende des Haltegriffs 1 angebracht ist. Das vordere Ende des Haltegriffs 1 ist weiterhin mit einer Metallschutzkappe 21 versehen. Aus diesem Ende des Haltegriffs 1 ragt die Verlängerungsstange 2 heraus, welche an ihrem vorderen Ende um ungefähr 45° bogenförmig gekrümmt ist, wobei eine kleinere oder größere Krümmung vorgesehen sein kann, falls es die Anwendung verlangt. Dabei weist dieses vordere Ende der Verlängerungsstange 2 in seiner Verlängerung eine Gewindestange 30 auf, deren Außendurchmesser im wesentlichen dem der Verlängerungsstange 2 entspricht.

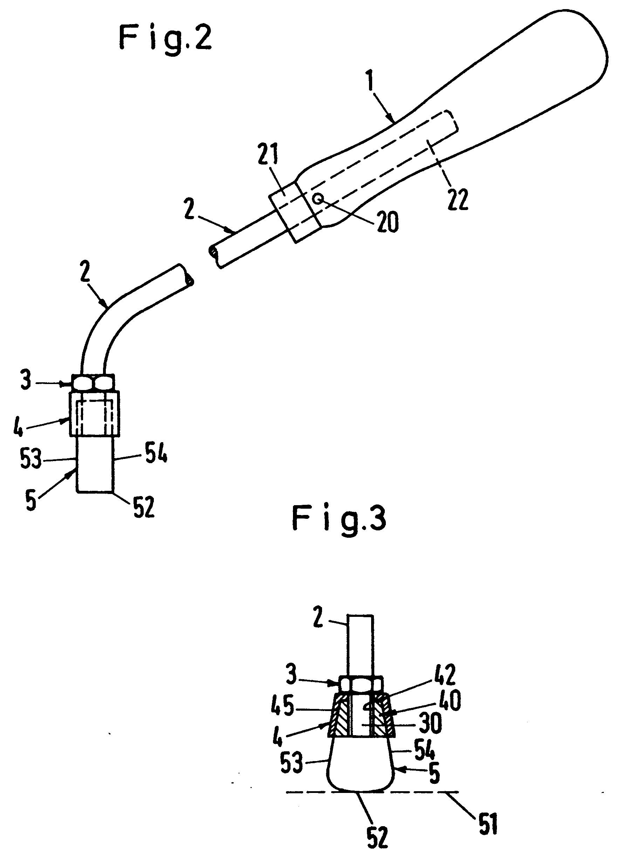

Fig. 2 verdeutlicht die Halterung eines streifenförmigen Abschnitts 5, welcher hier U-förmig ausgebildet ist, an der Gewindestange aus Fig 1., die wie zuvor beschrieben an einer Verlängerungsstange 2 vorgesehen ist. Wieder erkennt man den Haltegriff 1, in welchem der Befestigungsabschnitt 22 der Verlängerungsstange 2 durch Stifte 20 gehalten ist, mit der Metallschutzkappe 21 an seinem vorderen Ende, aus der auch die gekrümmte Verlängerungsstange 2 ragt. Auf der Gewindestange 30 sitzt eine Spannhülse 4, in welcher ein später genauer zu beschreibender Spannkern untergebracht ist. Der streifenförmige Abschnitt 5 ragt mit Abschnitten 53, 54 in die Spannhülse 4 hinein. Zum Festlegen und Positionieren der Spannhülse 4 dient eine Kontermutter 3, wobei der äußere Umfang der Kontermutter 3 etwa gleich dem Umfang der Spannhülse 4 ist. Wenigstens ein Längsrand des streifenförmigen Abschnitts 5 weist eine Schneidekante 52 auf.

Figur 3 zeigt den Bereich der Halterung des streifenförmigen Abschnitts 5, teilweise geschnitten, von vorn. Dabei sitzt an dem vorderen Ende der Verlängerungsstange 2 auf der Gewindestange 30 die einen Spannkern 40 umgebende Spannhülse 4, wobei die Abschnitte 53, 54 des streifenförmigen Abschnittes 5 zwischen der Spannhülse 4 und dem Spannkern 40 klemmend gehalten sind. Dabei ist die Spannhülse 4 ein Hohlkörper, der im Schnitt etwa trapezförmig ausgebildet ist und an seiner Oberseite eine kreisförmige Öffnung etwa vom Umfang der Gewindestange 30, hingegen an seiner Unterseite eine ganzflächige Öffnung aufweist. Es können diese Öffnungsgrößen nach Art der Anwendung variieren. Der Spannkern 40, welcher von einer Gewindebohrung 42 durchsetzt ist, ist ebenfalls im Schnitt trapezförmig ausgebildet, jedoch in seinen Außenabmessungen kleiner als die Spannhülse 4. Dadurch kann der Spannkern 40 in die Spannhülse 4 gelegt werden. Durch die in die Gewindebohrung 42 eingreifende Gewindestange 30 werden Spannkern 40 und Spannhülse 4 an der Gewindestange 30 festgehalten. Die unterschiedlichen trapezförmigen Größen der Spannhülse 4 und des Spannkerns 40 sind so gehalten, daß ein ausreichend großer Raum 45 zwischen Spannhülse 4 und Spannkern 40 freibleibt, um die Abschnitte 53, 54 zwischen Spannhülse 4 und Spannkern 40 klemmend zu halten. Dabei werden diese von der Kontermutter 3, welche auf der Gewindestange 30 sitzt, festgehalten und in die gewünschte Position gebracht. Die beiden Abschnitte 53, 54 sind leicht nach außen gewölbt, um einen besseren Klemmeffekt zu erzielen. Dieses ist aber nicht unbedingt erforderlich. An einem der Längsränder des U-förmig ausgebildeten streifenförmigen Abschnitts 5 befindet sich die schon erwähnte Schneidkante 52, welche hier in Fig. 3 bogenartig verläuft und eine Schneidebene 51 nur tangiert. Es ist ebenso gut möglich, die Schneidkante bzw. den streifenförmigen Abschnitt wenigstens bereichsweise gerade auszubilden, so daß die Schneidkante in diesen Bereichen in der Schneidebene liegt. Eine entsprechend gleichartig gestaltete Schneidkante ist am gegenüberliegenden Längsrand des streifenförmigen Abschnittes 5 vorgesehen.

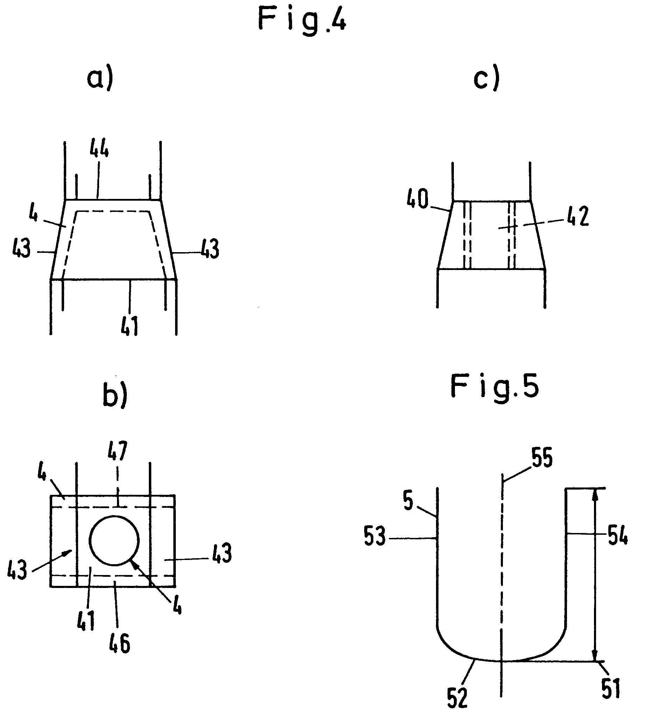

Die Figuren 4(a) bis 4(c) verdeutlichen den Aufbau einer Spannhülse 4 und eines Spannkerns 40.

Dabei zeigt Fig. 4(a) eine Seitenansicht einer Spannhülse 4, welche als Hohlkörper und im Schnitt trapezförmig ausgebildet ist. Die Seitenwände 43 sind entsprechend der trapezförmigen Ausbildung schräggestellt, an der Oberseite ist die im Zusammenhang mit Fig. 3 schon erwähnte Öffnung 44 vorgesehen.

An der Ober- und Unterseite besitzt die Spannhülse 4 jeweils Öffnungen, welche in der Draufsicht der Fig. 4(b) deutlich erkennbar sind. Daraus geht hervor, daß die Spannhülse 4 an ihrer Oberseite eine nicht notwendigerweise kreisförmige Öffnung 44, an ihrer Unterseite eine nicht notwendigerweise ganzflächige Öffnung 41 aufweist. Dabei ist aber darauf zu achten, daß die Öffnung 41 groß genug ist, damit der Spannkern nach dem Lösen der Kontermutter ohne Schwierigkeiten aus der Spannhülse 4 genommen oder in die Spannhülse 4 eingelegt werden kann, um so einen Austausch des streifenförmigen Abschnitts zu ermöglichen. Die kreisförmige Öffnung 44 besitzt einen Durchmesser von zumindest den Umfang der Gewindestange. Vorderwand 46 und Rückwand 47 sind trapezförmig ausgebildet und schließen bündig mit den Seitenwänden 43 ab.

Fig. 4(c) zeigt eine Querschnittsdarstellung des trapezförmigen Spannkerns 40, welcher in die Spannhülse einlegbar ist. Man erkennt wiederum die in den Spannkern 40 eingelassene Gewindebohrung 42. Die den Seitenwänden der Spannhülse im eingelegten Zustand gegenüberliegenden Bereiche des Spannkerns 40 haben etwa deren Steigung, es kann jedoch auch eine geringere Steigung für diese Bereiche gewählt werden, wenn dies erforderlich erscheint.

Fig. 5 gibt eine schematische Ansicht des U-förmig ausgebildeten, streifenförmigen Abschnitts 5 wieder. ist dieser Abschnitt so gebogen, daß dessen Radialwinkel ungefähr 18° beträgt, und zwar von der Symmetrieachse 55 des Abschnitts 5 aus gemessen. Dabei ist im bogenförmig ausgebildeten Bereich die Schneidkante 52 vorgesehen, die sich aber auch teilweise entlang des jeweiligen Randes der Abschnitte 53, 54 erstreckt. Die sich beidseitig an den bogenförmigen Abschnitt anschließenden Abschnitte 53, 54 erstrecken sich zum Halteelement hin. Die Schneidkante 52 kann dabei einen keilförmigen Anschliff mit einem Keilwinkel von 30° besitzen. Es ist nach Art und Weise der Anwendung durchaus ein anderer Anschliff möglich.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Bezugzeichenliste
==================

| 1 | Handgriff |
| 2 | Verlängerungsstange |
| 3 | Kontermutter |
| 4 | Spannhülse |
| 5 | Körper |
| 20 | Stift |
| 30 | Gewindestange |
| 40 | Spannkern |
| 41 | untere Öffnung der Spannhülse |
| 42 | Gewindebohrung |
| 43 | Seitenwände |
| 44 | obere Öffnung der Spannhülse |
| 45 | Raum zwischen Spannkern und Spannhülse |
| 46 | Vorderwand |
| 47 | Rückwand |
| 51 | Schneidebene |
| 52 | Schneidkante |
| 53 | Abschnitt des Körpers 5 |
| 54 | Abschnitt des Körpers 5 |
| 55 | Symmetrieachse |

**Patentansprüche**

1. Werkzeug zum Entfernen von insbesondere aus Kunststoff oder dergleichen bestehenden Oberflächenbeschichtungen, insbesondere zum Entfernen von Unterbodenschutz auf PVC-Basis oder dergleichen von Kraftfahrzeugen, mit einem wenigstens eine Schneidkante aufweisenden Körper, der an einem Halteelement befestigt ist,
**dadurch gekennzeichnet**, daß der Körper aus einem im wesentlichen streifenförmigen Abschnitt (5) aus Federstahl, Hochleistungsschnellschnittstahl od. dgl. besteht, wobei wenigstens ein Längsrand des Abschnittes (5) die Schneidkante(n) (52) aufweist und wobei sich wenigstens die an die Schneidkante(n) anschließenden Abschnitte (53, 54) zum Halteelement (1, 2) hin erstrecken und an diesem gehalten sind.

2. Werkzeug nach Anspruch 1, dadurch gekennzeichnet, daß der Körper (5) im wesentlichen U-förmig ausgebildet ist, wobei wenigstens im bogenförmigen Bereich die Schneidkante(n) vorgesehen ist/sind.

3. Werkzeug nach Anspruch 1 oder 2, dadurch gekennzeichnet, daß die Abschnitte (53, 54) leicht nach außen gewölbt sind.

4. Werkzeug nach einem der Ansprüche 1 bis 3, dadurch gekennzeichnet, daß an jedem der Längsränder des streifenförmigen Abschnittes (5) eine Schneidkante (52) ausgebildet ist.

**5.** Werkzeug nach einem der Ansprüche 1 bis 4, dadurch gekennzeichnet, daß die Schneidkante(n) (52) durch einen keilförmigen Anschliff mit einem Keilwinkel von etwa 30° gebildet ist/sind.

**6.** Werkzeug nach einem der Ansprüche 1 bis 5, dadurch gekennzeichnet, daß an dem Halteelement (1, 2) eine einen Spannkern (40) wenigstens teilweise umgebende Spannhülse (4) vorgesehen ist, wobei die Abschnitte (53, 54) zwischen der Spannhülse (4) und dem Spannkern (40) klemmend gehalten sind.

**7.** Werkzeug nach Anspruch 6, dadurch gekennzeichnet, daß die Abschnitte (53, 54) leicht nach außen gewölbt sind.

**8.** Werkzeug nach Anspruch 6 oder 7, dadurch gekennzeichnet, daß der Spannkern (40) von einer Gewindebohrung (42) durchsetzt ist, in welche eine am Halteelement (1, 2) vorgesehene Gewindestange (30) eingreift, wobei auf der Gewindestange (30) eine Kontermutter (3) zum Festlegen der Spannhülse (4) und des Spannkerns (40) in einer gewünschten Position angeordnet ist.

**9.** Werkzeug nach Anspruch 8, dadurch gekennzeichnet, daß das Halteelement (1, 2) einen Handgrif (1) und eine mit diesem verbundene Verlängerungsstange (2) aufweist, die integral mit der Gewindestange (30) ausgebildet und im Querschnitt kreisförmig ist, wobei ihr Außendurchmesser im wesentlichen dem der Gewindestange (30) entspricht.

**10.** Werkzeug nach einem der Ansprüche 1 bis 9, dadurch gekennzeichnet, daß der streifenförmige Abschnitt (5) unter Vorspannung am Halteelement (1, 2) gehalten ist.

Fig.1

EP 0 530 620 A2

Fig.2

Fig.3

# Fig.4

## a)

## b)

## c)

# Fig.5